# EUROPEAN PATENT APPLICATION

(11) **EP 4 345 450 A1**
(43) Date of publication of application: **03.04.2024**
(21) Application number: 23196161.6
(22) Date of filing: 08.09.2023
(51) Int. Cl.: G01N 29/04, G01N 29/07, G01N 29/11, G01N 29/26, G01N 29/44, G01N 29/48

(54) **DETERMINATION OF THE RADIAL EXTENSION OF CRACK/DEFECT STRUCTURES BEYOND THE SHELL SURFACE OF CYLINDER OBJECTS USING ULTRASONIC PHASED ARRAY PROBES**

(30) Priority: 28.09.2022 US 202263377407 P
(71) Applicant: Baker Hughes Holdings LLC, Houston, TX 77073 (US)
(72) Inventor: WUERSCHIG, Thomas, Houston, 77073 (US); KAHMANN, Frank, Schenectady, 12345 (US); HENRIX, Frank, Hurth (DE); WERNER, Daniel, Houston, 77073 (US); FRANZEN, Andreas, Houston, 77073 (US)
(74) Representative: Illingworth-Law, William Illingworth

(57) **Abstract**

An acoustic signal is emitted by an acoustic emitter mounted on a circumferential surface of a cylinder. The acoustic signal is received by an acoustic receiver mounted on the circumferential surface of the cylinder. A duration of time between emitting the acoustic signal and receiving the acoustic signal is determined. An amplitude of the received acoustic signal is determined. A location of a fracture within the cylinder is determined based on the determined time and the determined amplitude. A size of the fracture within the cylinder is determined based on the determined time and the determined amplitude. A fitness for service is determined determining based on the determined fracture location and the determined fracture size.

## Description

### TECHNICAL FIELD

This disclosure relates to non-destructive method for the radial depth determination of crack structures under the shell surface of cylindrical objects conditions considering the complex defect structure (length, size, orientation, defect network).

### BACKGROUND

Cylinders that are used in high load rolling applications (such as train wheels or roller bearing components) experience cracking due to fatigue, corrosion, or any other number of reasons. Such cracks can lead to catastrophic failure under high-load conditions, such as during operation. Alternatively or in addition, inclusions (contaminant structures) introduced during manufacturing or operations can cause similar catastrophic failures, as can exclusions (voids).

### SUMMARY

An example implementation of the subject matter described within this disclosure is a method with the following features. An acoustic signal is emitted by an acoustic emitter mounted on a circumferential surface of a cylinder. The acoustic signal is received by an acoustic receiver mounted on the circumferential surface of the cylinder. A duration of time between emitting the acoustic signal and receiving the acoustic signal is determined. An amplitude of the received acoustic signal is determined. A location of a fracture within the cylinder is determined based on the determined time and the determined amplitude. A size of the fracture within the cylinder is determined based on the determined time and the determined amplitude. A fitness for service is determined determining based on the determined fracture location and the determined fracture size.

Aspects of the example method, which can be combined with the example method alone or in combination, include the following. The cylinder includes a train wheel.

Aspects of the example method, which can be combined with the example method alone or in combination, include the following. The acoustic signal is a first received acoustic signal. The acoustic emitter is mounted on a first location. The method further includes the following features. The acoustic emitter is moved to a new location along the cylinder. A second acoustic signal is emitted by the emitter. The second acoustic signal is received by the receiver. The first received signal and the second received signal are combined to produce a summation signal.

Aspects of the example method, which can be combined with the example method alone or in combination, include the following. Combining the first received acoustic signal and the second received acoustic signal includes applying a position correction factor.

Aspects of the example method, which can be combined with the example method alone or in combination, include the following. Combing the first received acoustic signal and the second received acoustic signal includes summing the first signal to the second signal.

Aspects of the example method, which can be combined with the example method alone or in combination, include the following. Combining the first received signal and the second received signal includes determining a difference between the first signal and the second signal.

Aspects of the example method, which can be combined with the example method alone or in combination, include the following. A fixed relative position between the emitter and the acoustic receiver is maintained.

Aspects of the example method, which can be combined with the example method alone or in combination, include the following. The acoustic emitter and the acoustic receiver are located within a same probe body.

Aspects of the example method, which can be combined with the example method alone or in combination, include the following. The acoustic emitter and the acoustic receiver are located within separate probe bodies.

An example of the subject matter described within this disclosure is a system with the following features. An acoustic emitter is configured to be mounted on a circumferential surface of a cylinder. An acoustic receiver is configured to be mounted on the circumferential surface of the cylinder. A controller is coupled to the acoustic emitter and the acoustic receiver. The controller configured send a first signal to the acoustic emitter. The signal is configured to cause the emitter to emit an acoustic signal. The controller is configured to receive a second signal from the acoustic receiver. The second signal is indicative of the acoustic signal received by the acoustic receiver. The controller is configured to determine a time duration between the first signal and the second signal. The controller is configured to determine an amplitude of the second signal. The controller is configured to determine a location of a fracture within the cylinder based on the determined time and the determined amplitude. The controller is configured to determine a size of the fracture within the cylinder based on the determined time and the determined amplitude. The controller is configured to determine if the cylinder is fit for service based on the determined fracture location and the determined fracture size.

Aspects of the example system, which can be combined with the example system alone or in combination with other aspects, include the following. The cylinder includes a train wheel.

Aspects of the example system, which can be combined with the example system alone or in combination with other aspects, include the following. The acoustic signal is a first acoustic signal. The acoustic emitter is mounted on a first location. The controller is further configured to record a first position of the acoustic emitter. The controller is further configured to record a second position of the acoustic emitter. The second position is different from the first position. The controller is further configured to send a third signal to the acoustic emitter. The third signal is configured to cause the emitter to emit a second acoustic signal. The controller is further configured to receive a fourth signal from the acoustic receiver. The fourth signal is indicative of the second acoustic signal received by the acoustic receiver. The controller is further configured to combine the second received signal and the fourth received signal to produce a summation signal.

Aspects of the example system, which can be combined with the example system alone or in combination with other aspects, include the following. Combining the second received signal and the fourth received signal includes applying a position correction factor based on the recorded first position and the recorded second position.

Aspects of the example system, which can be combined with the example system alone or in combination with other aspects, include the following. Combing the second received signal and the fourth received signal includes summing the first signal to the second signal.

Aspects of the example system, which can be combined with the example system alone or in combination with other aspects, include the following. Combining the second received signal and the fourth received signal includes determining a difference between the second received signal and the fourth received signal.

Aspects of the example system, which can be combined with the example system alone or in combination with other aspects, include the following. The acoustic emitter and the acoustic receiver are located within separate probe bodies.

An example implementation of the subject matter described within this disclosure is a system with the following features. An acoustic emitter is mounted on an outer surface of a metal wheel. An acoustic receiver is mounted on an outer surface of the metal wheel. A controller is coupled to the acoustic emitter and the acoustic receiver. The controller is configured to send a first signal to the acoustic emitter. The signal is configured to cause the emitter to emit an acoustic signal. A second signal is received from the acoustic receiver. The second signal is indicative of the acoustic signal received by the acoustic receiver. The controller is configured to determine a time duration between the first signal and the second signal. The controller is configured to determine an amplitude of the second signal. The controller is configured to determine a location of a fracture within the metal wheel based on the determined time and the determined amplitude. The controller is configured to determine a size of the fracture within the metal wheel based on the determined time and the determined amplitude. The controller is configured to determine if the metal wheel is fit for service based on the determined fracture location and the determined fracture size.

Aspects of the example system, which can be combined with the example system alone or in combination with other aspects, include the following. The acoustic signal is a first acoustic signal. The acoustic emitter is mounted on a first location. The controller is further configured to record a first position of the acoustic emitter. The controller if further configured to record a second position of the acoustic emitter. The second position being different from the first position. The controller is configured to send a third signal to the acoustic emitter. The third signal is configured to cause the emitter to emit a second acoustic signal. The controller is further configured to receive a fourth signal from the acoustic receiver. The fourth signal is indicative of the second acoustic signal received by the acoustic receiver. The controller is further configured to combine the second received signal and the fourth received signal to produce a summation signal.

Aspects of the example system, which can be combined with example system alone or in combination with other aspects, include the following. Combining the second received signal and the fourth received signal includes applying a position correction factor based on the recorded first position and the recorded second position.

Aspects of the example system, which can be combined with example system alone or in combination with other aspects, include the following. The acoustic emitter and the acoustic receiver includes a phased array.

### BRIEF DESCRIPTION OF DRAWINGS

FIG. 1 is an example train wheel being acoustically scanned with a two probe system.
FIG. 2 is an example train wheel being scanned with a single probe system.
FIG. 3 illustrates different measurements being added to one another.
FIG. 4 illustrates different measurements being added to one another.
FIG. 5 illustrates an example controller that can be used with aspects of this disclosure.
FIG. 6 illustrates a flowchart of an example method that can be used with aspects of this disclosure.

### DETAILED DESCRIPTION

This disclosure relates to detecting imperfections, such as cracks, inclusions, or exclusions, within a cylinder. For detection, an acoustic emitter and an acoustic receiver are placed upon an outer surface, such as a circumferential surface or lateral surface, of a cylinder. Acoustic measurements are then taken in multiple positions and combined. The combination of multiple measurement improves a signal to noise ratio making it easier to locate and assess imperfections. The imperfections are assessed and a fitness for service of the cylinder is determined based on the assessment.

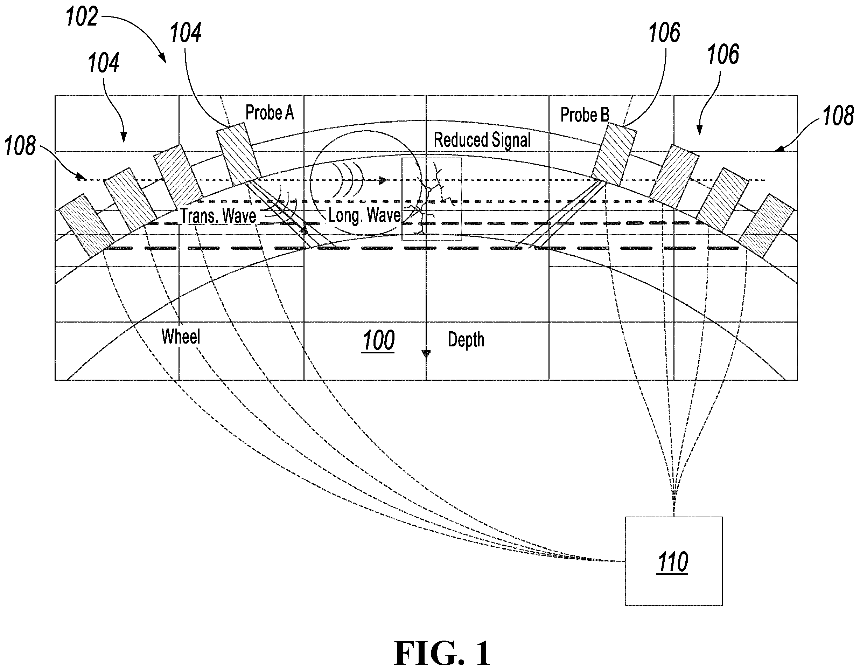

FIG. 1 is an example train wheel 100 being acoustically scanned with a two probe system 100. While primarily described in the context of train wheel inspection, the subject matter described herein is applicable to any rolling cylinder configured to bear a load, for example train wheels or roller bearing components, such as bearing components used within wind turbines.

The system 100 includes an acoustic emitter 104 configured to be mounted on a circumferential surface of a cylinder, such as the train wheel 100. An acoustic receiver 106 is configured to be mounted on the circumferential surface of the cylinder such that both the acoustic transmitter 104 and the acoustic receiver 106 are on the cylinder simultaneously. In some implementations, additional acoustic transmitters 104 and additional acoustic receivers 106 are included, such as implementations, where several transmitters 104 and receivers 106 are mounted to a jig. In such implementations, a cylinder, such as the train wheel 100, can be received and scanned quickly with little time needed for set-up. Regardless, such implementations are still considered two-probe systems as each acoustic transmitter 104 has a corresponding acoustic receiver 106, each in separate probe housings 108. In some implementations, the acoustic signals transmitted by the acoustic transmitter(s) 104 are attenuated (amplitude reduced), and the attenuation is used to at least partially determine a location and/or severity of an inclusion, exclusion, or fracture within the train wheel 100. Throughout this disclosure, the term "amplitude" is used generally and can be taken to refer to a resulting amplitude of a signal, whether that signal is amplified or attenuated.

Such determinations are made by a controller 110 that is coupled to the acoustic emitters 104 and acoustic receivers 106. Details on the controller are discussed throughout this disclosure. While implementations described within this disclosure focus on acoustic measurements taken along an outer circumference of a cylinder, it should be noted that measurements taken along any surface, such as the lateral ends of a veering or train wheel, can be used without departing from this disclosure.

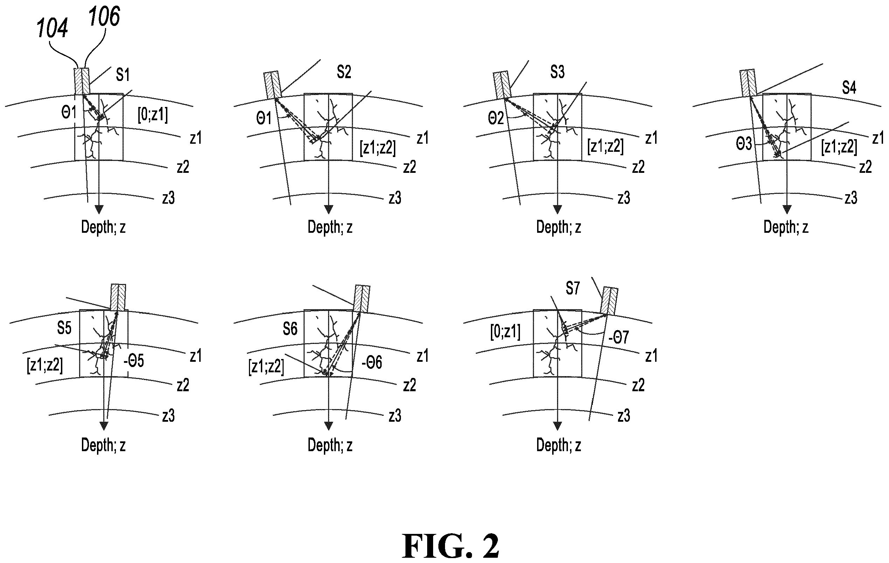

FIG. 2 is an example train wheel 100 being scanned with a single probe system 202 at various position. In the single probe system 202, the acoustic emitter 104 and the acoustic receiver 106 are within a singular probe housing 208. In such an implementation, the acoustic receiver 106 measures an amplitude of an echo off of an inclusion, exclusion, or fracture. Similar data can be determined from such an implementation as the two probe system 100 previously described. While implementations described within this disclosure primarily focus on single and dual probe implementations, other arrangements, such as a phased array, can be used without departing from this disclosure. In such implantations, the controller 110 is configured to use delay laws to control an angle of transmission and reception of the acoustic signal

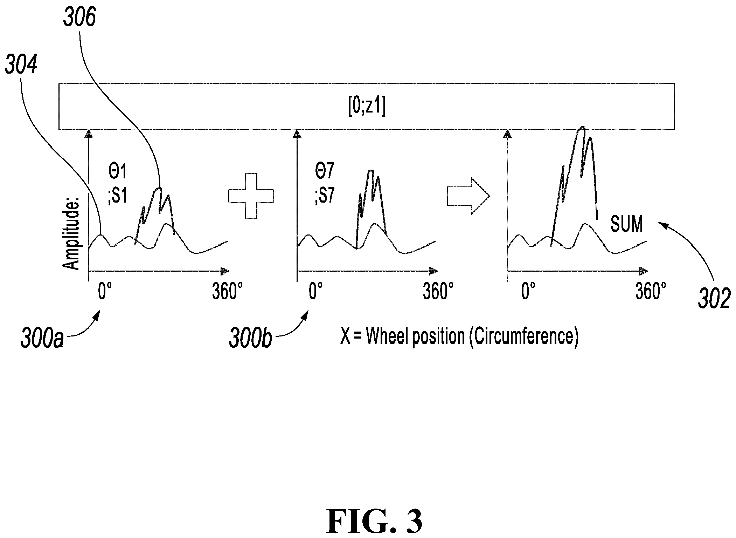

FIG. 3 illustrates different measurements 300a and 300b being added to one another to produce a composite measurement 302. Measurements are determined based on the received acoustic signals include both noise 304 and spikes 306 indicative of an inclusion, exclusion, or fracture. Multiple measurements taken from different positions can be added to increase a signal to noise ratio and make locating potential inclusions, exclusions, or fractures more apparent. When adding two different measurements, the location of the probes (104, 406) must be normalized to a location along the train wheel 100 (FIG. 1). That is, the signal is across locations between 0-360 degrees along the wheel (X-axis), and the signal is normalized to align with the fixed coordinate system of the wheel 100. Normalized measurements taken with similar techniques (for example, single probe measurements or double probe measurements) can be added together as described herein with no modification.

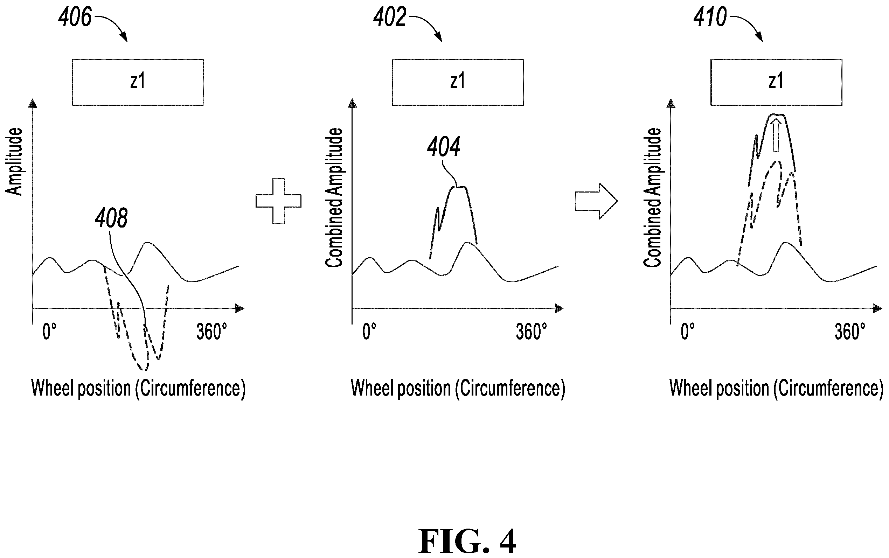

FIG. 4 illustrates normalized measurements taken with different techniques being combined with one another. An echo measurement 402 (taken with a single probe technique) measures an amplitude, shown as a wave with a positive spike 404, while a transverse or long-wave measurement 406 (taken with a dual probe technique) measures an attenuation, shown as a wave with a negative spike 408. In this example, to combine such wave forms, one of the waves is multiplied by -1, then the two waves are added to produce a combined waveform 410. Such a technique can be used with any number of measurements.

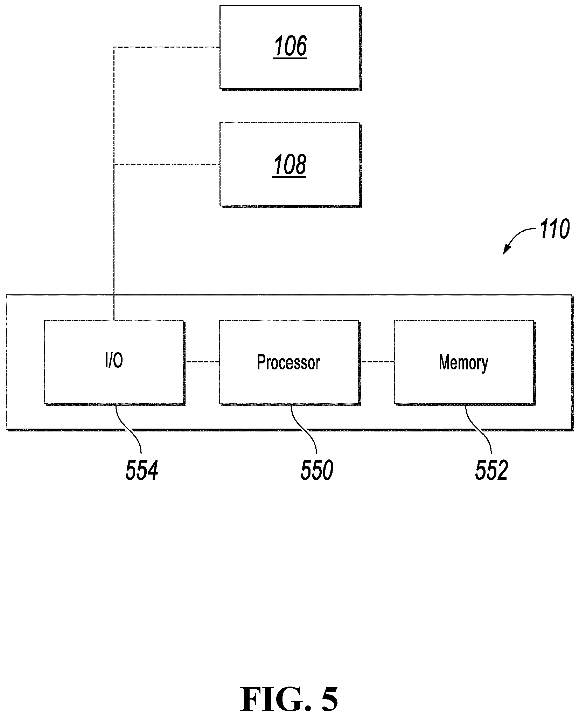

FIG. 5 illustrates an example controller that can be used with aspects of this disclosure. The controller 110 can, among other things, monitor parameters of the systems 100 and/or 200 and send signals to actuate and/or adjust various operating parameters of such systems. As shown in FIG. 5, the controller 110 can include one or more processors 550 and non-transitory storage media (e.g., memory 552) containing instructions that cause the processors 550 to perform operations described herein. The processors 550 are coupled to an input/output (I/O) interface 554 for sending and receiving communications with components in the system, including, for example, the acoustic emitter 104 and the acoustic receiver 106. In certain instances, the controller 110 can additionally communicate status with and send actuation and/or control signals to one or more of the various system components (including systems within a workshop or warehouse coupled to the system) of the system (100, 200), as well as other sensors (e.g., pressure sensors, temperature sensors, vibration sensors and other types of sensors) that provide signals to the system (100, 200).

In operation, the controller is configured to perform the following functions. The controller 110 is configured to send a first signal to the acoustic emitter. The first signal is configured to cause the emitter to emit an acoustic signal. The controller 110 is configured to receive a second signal from the acoustic receiver. The signal is indicative of the acoustic signal received by the acoustic receiver. The controller 100 then determines a time duration between the first signal and the second signal and determines an amplitude of the second signal. Based on the determined time and the determined amplitude, the controller 110 then determines a location and a size of a fracture within the cylinder. Based on the determined location and size of the fracture, a fitness of service is determined, in some implementations, by the controller 110. That is, a determination is made whether or not the cylinder is usable for the cylinders intended purpose or not.

The controller 110 is also configured to record positions of the acoustic emitter 104 and the acoustic receiver 106 during measurement operations. Such recording can be done automatically with position sensors, or can be entered manually by an operator. In instances where multiple measurements are taken from multiple positions, the controller 110 is configured to record a first position and a second position of the acoustic emitter 104. In some implementations, the second position is different from the first position. Once the acoustic emitter 104 is secured in the second position, the controller 110 sends a third signal to the acoustic emitter 104. The third signal is configured to cause the acoustic emitter 104 to emit a second acoustic signal. The controller 110 then receives a fourth signal, from the acoustic receiver 106, which is indicative of the second acoustic signal being received by the acoustic receiver 106. The controller 110 then combines the second received signal and the fourth received signal to produce a summation or composite signal, for example, by using the techniques described within this disclosure.

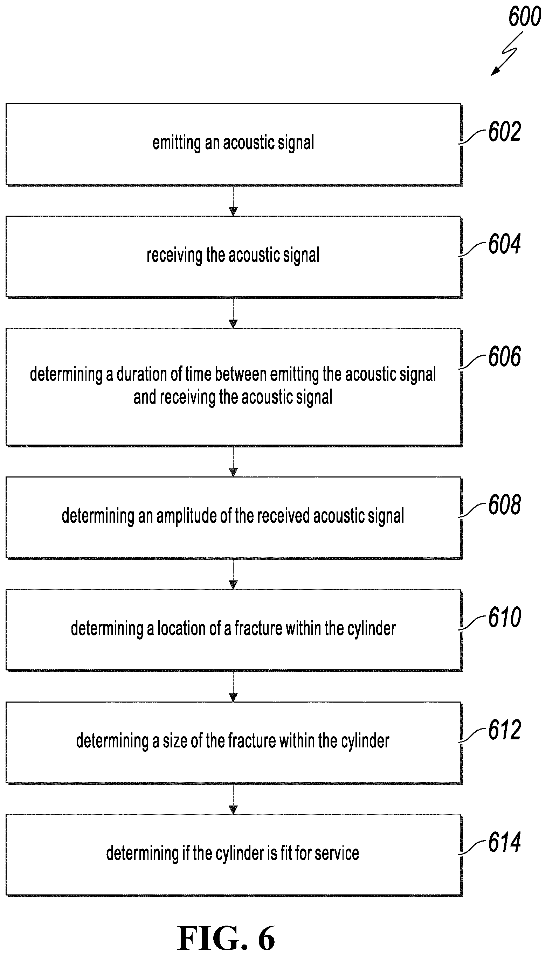

FIG. 6 illustrates a flowchart of an example method 600 that can be used with aspects of this disclosure. In some implementations, all or part of the method 600 can be performed by the controller 110. At 602, an acoustic signal is emitted by an acoustic emitter 104 mounted on a circumferential surface of a cylinder. In some instance, the cylinder is a metallic wheel, such as a train wheel 100. At 604, the acoustic signal is received by an acoustic receiver mounted on the circumferential surface of the cylinder. In some implementations, the acoustic emitter and the acoustic receiver are located within a same probe body. In some implementations, the acoustic emitter and the acoustic receiver are located in different probe bodies. In some implementations, a relative position of the acoustic emitter and the acoustic receiver remains fixed regardless of the housing arrangement used.

At 606, a duration of time between emitting the acoustic signal and receiving the acoustic signal is determined. At 608, an amplitude of the received acoustic signal is determined. At 610, a location of a fracture within the cylinder is determined based on the determined time and the determined amplitude. At 612, determining a size of the fracture within the cylinder is determined based on the determined time and the determined amplitude. At 614, the cylinder is determined fit for service or not fit for service based on the determined fracture location and the determined fracture size.

In some implementations, multiple acoustic measurements are taken. In such instances, the acoustic emitter is moved to a new location along the cylinder. A second acoustic signal is then emitted by the emitter. The second acoustic signal by is received by the receiver. This process can be repeated as many times as desired by the user.

In some implementations, the first received signal and the second received signal are combined to produce a summation signal. Other additional signals can be combined to produce the summation signal without departing from this disclosure. Combining the first received acoustic signal and the second received acoustic signal includes applying a position correction factor. That is, the location of the emitter and receiver during each acoustic emission and receipt is known, and any plots and/or data analysis is performed based on a coordinate system of the cylinder being measured. In some implementations combining the first received acoustic signal and the second received acoustic signal includes summing the first signal to the second signal. In such implementations, both the first signal and the second signal are substantially similar in origin and/or manipulation. For example, both the first and the second signal include echo amplitudes or transverse attenuation. In some implementations, combining the first received signal and the second received signal includes determining a difference between the first signal and the second signal. In such implementations, the first signal and the second signal have different properties, for example, the first signal includes echo amplitudes and the second signal includes transverse attenuation.

While this disclosure contains many specific implementation details, these should not be construed as limitations on the scope of what may be claimed, but rather as descriptions of features specific to particular implementations of particular inventions. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the implementations described above should not be understood as requiring such separation in all implementations, and it should be understood that the described components and systems can generally be integrated together in a single product or packaged into multiple products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results.

## Claims

1. A method comprising:
emitting an acoustic signal by an acoustic emitter mounted on a circumferential surface of a cylinder;
receiving the acoustic signal by an acoustic receiver mounted on the circumferential surface of the cylinder;
determining a duration of time between emitting the acoustic signal and receiving the acoustic signal;
determining an amplitude of the received acoustic signal;
determining a location of a fracture within the cylinder based on the determined time and the determined amplitude;
determining a size of the fracture within the cylinder based on the determined time and the determined amplitude; and
determining if the cylinder is fit for service based on the determined fracture location and the determined fracture size.

2. The method of claim 1, wherein the cylinder comprises a train wheel.

3. The method of any one of claims 1-2, wherein the acoustic signal is a first received acoustic signal, wherein the acoustic emitter is mounted on a first location, the method further comprising:
moving the acoustic emitter to a new location along the cylinder;
emitting a second acoustic signal by the emitter;
receiving the second acoustic signal by the receiver; and
combining the first received signal and the second received signal to produce a summation signal.

4. The method of any one of claims 1-3, wherein combining the first received acoustic signal and the second received acoustic signal comprises applying a position correction factor.

5. The method of any one of claims 1-3, wherein combing the first received acoustic signal and the second received acoustic signal comprises summing the first signal to the second signal.

6. The method of any one of claims 1-3, wherein combining the first received signal and the second received signal comprises determining a difference between the first signal and the second signal.

7. The method any one of claims 1-6, further comprising:
maintaining a fixed relative position between the emitter and the acoustic receiver.

8. The method any one of claims 1-7, wherein the acoustic emitter and the acoustic receiver are located within a same probe body.

9. The method any one of claims 1-7, wherein the acoustic emitter and the acoustic receiver are located within separate probe bodies.

10. A system comprising:
an acoustic emitter configured to be mounted on a circumferential surface of a cylinder;
an acoustic receiver configured to be mounted on the circumferential surface of the cylinder;
a controller coupled to the acoustic emitter and the acoustic receiver, the controller configured to:
send a first signal to the acoustic emitter, the signal configured to cause the emitter to emit an acoustic signal;
receive a second signal from the acoustic receiver, the signal being indicative of the acoustic signal received by the acoustic receiver;
determine a time duration between the first signal and the second signal;
determine an amplitude of the second signal;
determine a location of a fracture within the cylinder based on the determined time and the determined amplitude;
determine a size of the fracture within the cylinder based on the determined time and the determined amplitude; and
determine if the cylinder is fit for service based on the determined fracture location and the determined fracture size.

11. The system of claim 10, wherein the cylinder comprises a train wheel.

12. The system of anyone of claims 10-11, wherein the acoustic signal is a first acoustic signal, wherein the acoustic emitter is mounted on a first location, the controller further configured to:
record a first position of the acoustic emitter;
record a second position of the acoustic emitter, the second position being different from the first position;
send a third signal to the acoustic emitter, the third signal configured to cause the emitter to emit a second acoustic signal;
receive a fourth signal from the acoustic receiver, the fourth signal being indicative of the second acoustic signal received by the acoustic receiver; and
combine the second received signal and the fourth received signal to produce a summation signal.

13. The system of claim 12, wherein combining the second received signal and the fourth received signal comprises applying a position correction factor based on the recorded first position and the recorded second position.

14. The system of claim 12, wherein combing the second received signal and the fourth received signal comprises summing the first signal to the second signal.

15. The system of claim 12, wherein combining the second received signal and the fourth received signal comprises determining a difference between the second received signal and the fourth received signal.

16. The system of any one of claims 10-15, wherein the acoustic emitter and the acoustic receiver are located within separate probe bodies.

17. A system comprising:
a solid metal wheel;
an acoustic emitter mounted on an outer surface of the metal wheel;
an acoustic receiver mounted on an outer surface of the metal wheel;
a controller coupled to the acoustic emitter and the acoustic receiver, the controller configured to:
send a first signal to the acoustic emitter, the first signal configured to cause the emitter to emit an acoustic signal;
receive a second signal from the acoustic receiver, the second signal being indicative of the acoustic signal received by the acoustic receiver;
determine a time duration between the first signal and the second signal;
determine an amplitude of the second signal;
determine a location of a fracture within the metal wheel based on the determined time and the determined amplitude;
determine a size of the fracture within the metal wheel based on the determined time and the determined amplitude; and
determine if the metal wheel is fit for service based on the determined fracture location and the determined fracture size.

18. The system of claim 17, wherein the acoustic signal is a first acoustic signal, wherein the acoustic emitter is mounted on a first location, the controller further configured to:
record a first position of the acoustic emitter;
record a second position of the acoustic emitter, the second position being different from the first position;
send a third signal to the acoustic emitter, the third signal configured to cause the emitter to emit a second acoustic signal;
receive a fourth signal from the acoustic receiver, the fourth signal being indicative of the second acoustic signal received by the acoustic receiver; and
combine the second received signal and the fourth received signal to produce a summation signal.

19. The system of claim 18, wherein combining the second received signal and the fourth received signal comprises applying a position correction factor based on the recorded first position and the recorded second position.

20. The system of any one of claims 17-19, wherein the acoustic emitter and the acoustic receiver comprise a phased array.
